# FASCICULE DE BREVET EUROPEEN

(11) **EP 1 427 621 B1**
(45) Date de publication et mention de la délivrance du brevet: **28.11.2007**
(21) Numéro de dépôt: 02774909.2
(22) Date de dépôt: 06.09.2002
(51) Int. Cl.: B60T 11/232, B60T 11/236

(54) **MAITRE-CYLINDRE COMPORTANT UN CLAPET A COURSE MORTE REDUITE**
HAUPTBREMSZYLINDER MIT VERKÜRZTEM VENTIL-TODWEG
MASTER CYLINDER COMPRISING A VALVE WITH REDUCED PEDAL FREE TRAVEL

(30) Priorité: 10.09.2001 FR 0111758
(43) Date de publication de la demande: 16.06.2004
(73) Titulaire: ROBERT BOSCH GMBH, 70442 Stuttgart (DE)
(72) Inventeur: BOURLON, Philippe, F-77230 Dammartin En Goele (FR); LEBRET, Pierre, F-78000 Versailles (FR)
(74) Mandataire: Hurwic, Aleksander Wiktor
(86) Numéro de dépôt international: PCT/FR2002/003045
(87) Numéro de publication internationale: WO 2003/022652

(56) Documents cités:
- DE-A- 19 537 038
- US-A- 4 989 498
- US-A- 5 187 934

## Description

L'invention concerne un maître-cylindre hydraulique de freinage de type "tandem" pour un véhicule automobile.

L'invention concerne plus particulièrement un maître-cylindre hydraulique de freinage de type "tandem" pour un véhicule automobile, du type qui comporte un corps sensiblement axial à l'intérieur d'un alésage sont montés coulissants, d'arrière en avant, deux pistons axiaux primaire et secondaire qui sont susceptibles d'être actionnés par un conducteur du véhicule entre une position arrière de repos et une position avant d'application d'un effort de freinage, du type dans lequel chaque piston est rappelé élastiquement vers sa position arrière de repos à l'encontre d'une première butée arrière, du type dans lequel au moins un moyen d'étanchéité est interposé entre chaque piston et l'alésage pour délimiter dans l'alésage une chambre d'alimentation arrière en fluide hydraulique et une chambre de pression avant, du type dans lequel chaque piston comporte un alésage qui est ouvert vers l'avant et communique avec la chambre de pression avant, du type dans lequel le piston comporte au moins un clapet sensiblement radial qui débouche dans sa périphérie et dans son alésage et qui est mobile entre une position de passage, correspondant à la position arrière de repos du piston, selon laquelle le clapet est agencé en arrière du moyen d'étanchéité et met en communication la chambre arrière d'alimentation et la chambre de pression avant, et une position d'isolation, correspondant à la position avant d'application du piston, selon laquelle le clapet est agencé en avant du moyen d'étanchéité et interrompt la communication entre la chambre arrière d'alimentation et la chambre avant de pression pour permettre l'établissement d'une pression hydraulique de freinage dans la chambre de pression avant.

On connaît de nombreux exemples de réalisation d'un maître-cylindre de ce type.

Dans un tel maître-cylindre, la pression hydraulique de freinage ne s'établit dans chaque chambre de pression qu'après que le piston associé ait parcouru une course déterminée, appelée "course morte", qui correspond à la distance séparant la position de repos du clapet radial du piston du moyen d'étanchéité.

En effet, tant que le clapet radial est agencé en arrière du moyen d'étanchéité, la chambre arrière d'alimentation et la chambre avant de pression communiquent et sont soumises à une pression égalé.

En revanche, lorsque, suite à l'avancée du piston, le clapet radial est passé en avant du moyen d'étanchéité, c'est à dire lorsque le piston a parcouru toute la "course morte", la chambre avant de pression se retrouve isolée de la chambre arrière d'alimentation, et de ce fait la pression hydraulique de freinage croît dans la chambre avant de pression à mesure que le piston avance.

Il importe donc, pour obtenir le plus rapidement possible l'établissement d'un pression hydraulique de freinage dans la chambre de pression considérée, de réduire autant que possible la "course morte" du piston.

Or il n'est pas possible de réduire la distance séparant le clapet radial du piston au repos du moyen d'étanchéité en modifiant les cotes de construction du maître-cylindre.

En effet, d'une part, le clapet radial doit nécessairement, au repos, être agencé en regard d'un orifice d'alimentation communiquant avec un réservoir hydraulique du maître-cylindre.

D'autre part, le moyen d'étanchéité, qui est généralement conçu sous la forme d'un joint à lèvre reçu dans une gorge du maître-cylindre, est distant de l'orifice d'alimentation d'au moins une distance correspondant à l'épaisseur d'une paroi de la gorge utilisée pour le maintien du joint à lèvre.

Les documents US 4 989 498 et US 5 187 934 décrivent chacun une chambre de pression avant associée à au moins un piston comportant au moins un élément cylindrique tubulaire extérieur au piston, maintenu axialement dans le corps du maître-cylindre, ledit élément cylindrique s'étendant axialement en arrière du moyen d'étanchéité et, lors de l'avancée du piston, obturant le clapet radial permettant d'obtenir une course de fermeture du clapet inférieure à la distance séparant lé clapet du moyen d'étanchéité.

Cependant il importe d'assurer une réalimentation rapide de la chambre de pression en fin de freinage. Or les maître-cylindres décrits dans les documents US 4 989 498 et US 5 187 934 n'assurent pas cette réalimentation rapide.

L'invention propose un moyen amélioré pour réduire la "course morte" en interposant un élément destiné à permettre la fermeture du clapet radial avant que celui-ci n'aie franchi le moyen d'étanchéité.

Dans ce but, l'invention propose un maître-cylindre du type décrit précédemment, caractérisé en ce qu'un espace sensiblement annulaire pour réalimenter la chambre de pression avant est ménagé entre le corps du maître-cylindre et l'élément tubulaire d'étanchéité, ledit espace reliant la chambre de pression avant et la chambre d'alimentation arrière.

Selon d'autres caractéristiques de l'invention:
- le moyen d'étanchéité est constitué d'un joint à lèvre qui est reçu dans une gorge de l'alésage du maître-cylindre,
- le moyen d'étanchéité comporte un lobe supérieur obturant l'espace pour réalimenter la chambre de pression avant lorsque la pression dans la chambre de pression avant est supérieure à la pression dans la chambre d'alimentation arrière, et libérant le passage du liquide de frein de la chambre d'alimentation arrière dans la chambre de pression avant lorsque la pression dans la chambre de pression avant est inférieure à la pression dans la chambre d'alimentation arrière,
- le piston est monobloc, et le clapet radial comporte au moins un perçage qui débouche dans la périphérie et dans l'alésage du piston,
- l'élément cylindrique tubulaire est constitué d'une bague annulaire qui est d'un diamètre intérieur égal à celui du piston, qui est accolée à l'arrière du joint à lèvre, et qui est reçue dans une gorge complémentaire du maître-cylindre,
- le joint comporte une lèvre supplémentaire en appui sur une face transversale avant de la bague annulaire,
- la bague est fendue pour permettre son montage au moins par l'arrière du maître-cylindre,
- le maître-cylindre comporte une face transversale d'extrémité avant démontable, de manière à permettre l'introduction d'au moins une bague pleine et du joint à lèvre par l'avant du maître-cylindre,
- le maître-cylindre comporte un joint à lèvre supplémentaire, agencé en arrière d'un cond'uit d'arrivée de fluide hydraulique qui débouche dans la chambre d'alimentation du piston, et la bague est agencée axialement entre les deux joints à lèvre,
- la bague comporte un perçage radial qui est agencé en regard du conduit d'arrivée de fluide hydraulique,
- les faces transversales d'extrémité avant et arrière de la bague comportent chacune une gorge annulaire pour la réception d'une collerette complémentaire de maintien du joint à lèvre attenant.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe axiale d'un maître-cylindre de type "tandem" selon un état antérieur de la technique représenté en position de repos;
- les figures 2A à 2C sont des vues en coupe de détail d'un maître-cylindre de type "tandem" selon un premier mode de réalisation de l'invention représenté respectivement en position de repos, d'isolation de la chambre avant secondaire de pression, et d'application d'un effort de freinage, par le piston secondaire,
- les figures 3 et 4 sont des vues en perspective de deux modes de réalisation de la bague formant l'élément cylindrique tubulaire du premier mode de réalisation de l'invention,
- les figures 5A à 5C sont des vues en coupe de détail d'un maître-cylindre de type "tandem" selon un deuxième mode de réalisation de l'invention représenté respectivement en position de repos, d'isolation de la chambre avant secondaire de pression, et d'application d'un effort de freinage, par le piston secondaire,
- la figure 6 est une vue en coupe de détail d'un maître-cylindre de type "tandem" selon un troisième mode de réalisation de l'invention représenté en position de repos du piston secondaire.

Dans la description qui va suivre, des chiffres de référence identiques désignent des pièces identiques ou ayant des fonctions similaires.

Par convention, les termes "avant" et "arrière", désignent respectivement des éléments ou des positions orientés respectivement vers la gauche et la droite des figures.

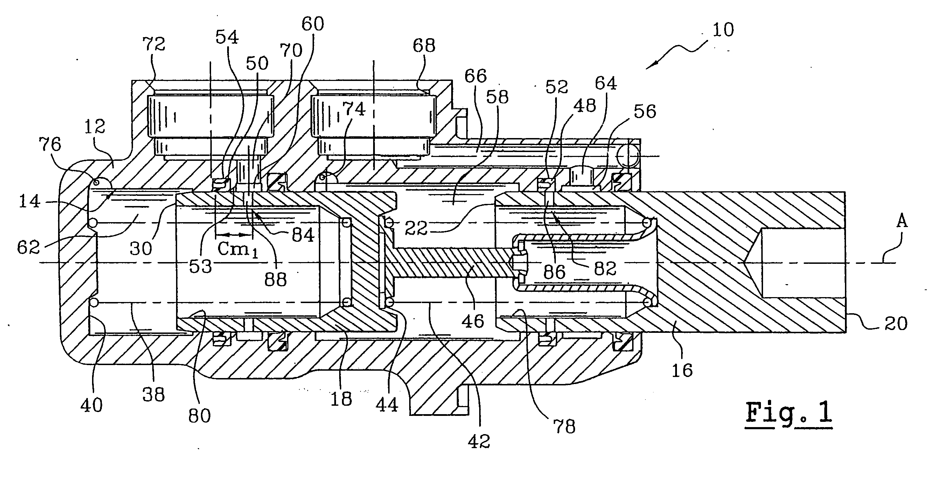

On a représenté à la figure 1 l'ensemble d'un maître-cylindre 10 de freinage pour un véhicule automobile.

De manière connue, le maître-cylindre 10 est un maître-cylindre de type "tandem" qui comporte un corps 12 sensiblement axial d'axe A à l'intérieur d'un alésage 14 duquel sont montés coulissants deux pistons axiaux 16 et 18.

Le piston 16, dit piston primaire 16, est destiné à permettre l'établissement d'une pression hydraulique dans un circuit primaire de freinage du véhicule (non représenté), et le piston 18, dit piston secondaire 18, est destiné à permettre l'établissement d'une pression hydraulique dans un circuit secondaire de freinage du véhicule (non représenté) qui est indépendant du circuit primaire de freinage du véhicule.

Le piston primaire 16 est susceptible d'être actionné directement par un conducteur du véhicule. Par exemple, une extrémité arrière 20 du piston primaire 16 est susceptible d'être reliée à un servomoteur (non représenté) qui amplifie les efforts exercés sur une pédale de freinage du véhicule.

Le piston secondaire 18 est susceptible d'être actionné indirectement par le conducteur du véhicule, notamment par le piston primaire 16, comme on le verra ultérieurement.

Chaque piston primaire 16 ou secondaire 18 est ainsi mobile entre une position arrière de repos, qui est représentée à la figure 1, et une position avant (non représentée) d'application d'un effort de freinage.

De manière connue, chaque piston primaire 16 ou secondaire 18 est rappelé élastiquement vers sa position arrière de repos. Il peut éventuellement être notamment rappelé élastiquement vers sa position arrière de repos à l'encontre d'une butée (non représentée).

Le piston secondaire 18 est rappelé vers l'arrière par un ressort 38 qui prend appui sur une face 40 transversale d'extrémité avant de l'alésage 14 et sur le piston secondaire 18, et le piston primaire 16 est rappelé élastiquement vers l'arrière par un ressort 42 qui prend appui sur une face 44 transversale arrière du piston secondaire 16 et sur le piston primaire 16. Plus particulièrement, le ressort 42 est monté autour d'un vérin coulissant 46 qui est interposé entre la face 44 transversale arrière du piston secondaire 18 et le piston primaire 16. Le ressort 42 est préchargé par le ressort 38.

Le maître-cylindre comporte au moins deux moyens avant d'étanchéité primaire 48 et secondaire 50 qui sont interposés respectivement entre le piston primaire 16 et l'alésage 14, et entre le piston secondaire 18 et l'alésage 14.

Dans le mode de réalisation préféré de l'invention, mais de façon non limitative de celle-ci, les moyens d'étanchéité primaire et secondaire sont réalisés par des joints à lèvre 48 et 50 qui sont reçus dans des gorges 52 et 54 du corps 12 agencées respectivement en arrière d'épaulements 28 et 36 de l'alésage 14. Chaque joint 48, 50 comporte au moins une lèvre qui est au contact de la périphérie du piston.16,18 associé.

Cette configuration n'est évidemment pas limitative de l'invention, et les joints 48, 50 pourraient être reçus dans des boîtiers cylindriques rapporté dans le corps du maître cylindre, lesdits boîtiers comportant tout ou partie des gorges 52, 54 dans lesquelles sont reçus les joints 48, 50.

Le moyen primaire d'étanchéité 48 délimite dans l'alésage 14 une chambre 56 primaire d'alimentation arrière et une chambre 58 primaire de pression avant. De même, le moyen secondaire d'étanchéité 50 délimité dans l'alésage 14 une chambre 60 secondaire d'alimentation arrière et une chambre 62 secondaire de pression avant.

Le corps 12 comporte un conduit 64 primaire radial d'alimentation qui relie un réservoir extérieur primaire (non représenté) de fluide hydraulique à la chambre d'alimentation primaire arrière 56.

En particulier, le conduit 64 primaire radial est par exemple relié par l'intermédiaire d'un conduit longitudinal intermédiaire 66 à un orifice 68 qui débouche à l'extérieur du corps 12 et qui est destiné à recevoir une bouche de sortie (non représentée) du réservoir primaire associé.

Dé même, le corps 12 comporte un conduit 70 secondaire radial d'alimentation qui relie un réservoir extérieur secondaire (non représenté) de fluide hydraulique à la chambre d'alimentation secondaire arrière 38. Le conduit 70 débouche à l'extérieur du corps 12 par l'intermédiaire d'un orifice 72 qui est destiné à recevoir une bouche de sortie (non représentée) du réservoir secondaire associé.

Le corps 12 comporte deux perçages primaire 74 et secondaire 76 qui débouchent d'une part respectivement dans les chambres de pression primaire 36 et secondaire 40 et d'autre part à l'extérieur du corps 12 pour alimenter des circuits de freinage associés (non représentés) primaire et secondaire.

De manière connue, chaque piston 16, 18 comporte un alésage 78, 80 qui est ouvert vers l'avant et qui communique avec la chambre de pression avant 58, 62. Chaque piston 16, 18 comporte au moins un clapet 82, 84 qui est agencé entre la chambre d'alimentation arrière 56, 60 et l'alésage 78, 80 du piston 16, 18.

Chaque clapet 82, 84 comporte, à titre d'exemple et de manière non limitative de l'invention, au moins un perçage radial 86, 88, agencé entre l'alésage 78, 80 de chaque piston 16, 18 et sa périphérie, dont la position par rapport au joint à lèvre 48, 50 permet ou non le passage du fluide hydraulique de la chambre d'alimentation arrière 56, 60 vers la chambre de pression avant 58, 62.

Ainsi, chaque clapet 82, 84 est mobile entre une position ouverte, représentée à la figure 1, dans laquelle, lorsqu'un des pistons 16, 18 est dans sa position arrière de repos, il met en communication la chambre d'alimentation arrière 56 ou 60 dudit piston 16, 18 avec la chambre de pression avant 58 ou 62 dudit piston 16, 18, et une position fermée (non représentée) dans laquelle, lorsque le piston 16, 18 est mû axialement vers l'avant vers sa position d'application, il isole la chambre de pression avant 58, 62 associée de la chambre d'alimentation arrière 56, 60 associée et permet ainsi l'établissement d'une pression de freinage dans la chambre de pression avant 58, 62.

Dans la suite de la présente description, on s'attachera plus particulièrement au fonctionnement du piston secondaire 18 dans la chambre de pression avant secondaire 62, attendu que le fonctionnement des pistons primaire 16 et secondaire 18 est sensiblement analogue.

Plus particulièrement, dans la configuration précédemment évoquée, la fermeture du clapet secondaire 84 est assujettie au parcours, par le piston secondaire 18, d'une course "Cₘ₁" dite "course morte", qui correspond à la distance séparant le perçage 88 du joint 50.

Ainsi, tant que le piston 18 n'a pas parcouru la course morte "Cₘ₁", le perçage 88 demeure en arrière du joint à lèvre 50 et permet le passage du fluide hydraulique entre la chambre secondaire d'alimentation arrière 60 et la chambre secondaire de pression avant 62. Dans ce cas, le clapet 84 est ouvert.

En revanche, une fois que le piston 18 a parcouru la course morte "Cₘ₁", le perçage 88 a franchi le joint à lèvre 50 et le passage du fluide hydraulique entre la chambre secondaire d'alimentation arrière 60 et la chambre secondaire de pression, avant 62 est interrompu. Dans ce cas, le clapet 84 est fermé.

Or il importe, pour bénéficier d'un freinage d'une efficacité maximum, de réduire au maximum la valeur de la course morte.

Selon la configuration précédemment décrite, il n'est pas possible de réduire la distance séparant le perçage 88 du joint 50.

En effet, d'une part, il est nécessaire qu'une paroi arrière 53 de la gorge 54 soit d'une épaisseur minimale pour assurer un maintien correct du joint 50 dans sa gorge 54. D'autre part, le perçage 88 doit, en position de repos du piston 18, être agencé sensiblement en regard du conduit d'alimentation 70 de manière à permettre une alimentation optimale du clapet 84 en fluide hydraulique.

Pour remédier à cet inconvénient, l'invention propose un maître cylindre du type décrit précédemment, caractérisé en ce que la chambre 62 de pression avant associée à au moins un piston 16, 18, comporte au moins un élément cylindrique tubulaire, extérieur au piston 16, 18, qui s'étend axialement en arrière du moyen d'étanchéité et qui est destiné, lors de l'avancée du piston 16, 18, à obturer le clapet radial pour obtenir une course morte de fermeture du clapet qui est inférieure à la distance séparant le clapet du moyen d'étanchéité.

Ainsi, dans le cadre particulier du fonctionnement du piston secondaire tel qu'on l'a représenté sur les figures, le maître cylindre est caractérisé en ce que la chambre 62 de pression avant associée au piston secondaire 18 comporte au moins un élément cylindrique tubulaire 90 qui s'étend à l'extérieur du piston 18 axialement en arrière du moyen d'étanchéité 50 et qui est destiné, lors de l'avancée du piston secondaire 18, à obturer le clapet radial 88 pour obtenir une course morte "Cₘ₂" de fermeture du clapet 88 qui est inférieure à la distance séparant le clapet 88 du moyen d'étanchéité 50.

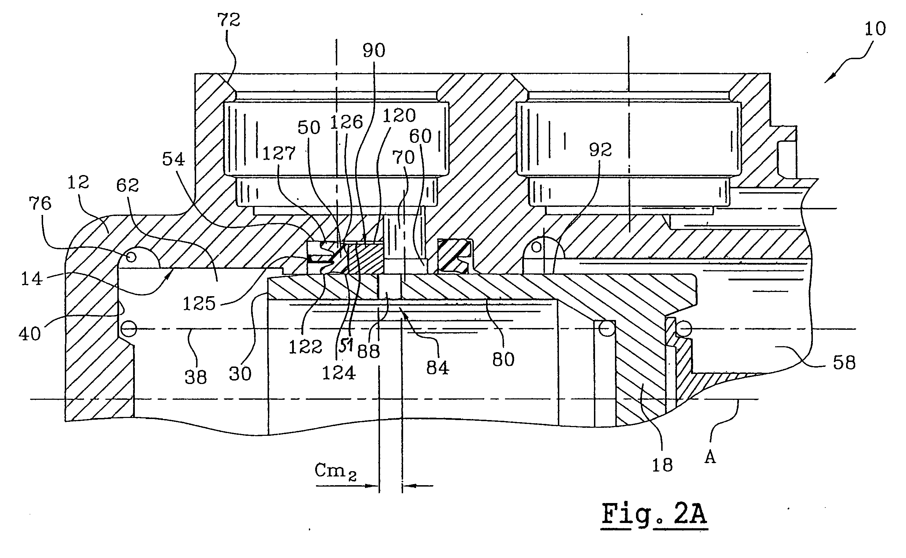

Différents modes de réalisation d'un maître-cylindre 10 comportant un tel élément cylindrique tubulaire 90 ont été représentés en référence aux figures 2A à 2C et 5A à 6.

Selon un premier mode de réalisation de l'invention qui est représenté en référence aux figures 2A à 2C, le piston secondaire 18 est monobloc et le clapet radial 84 comporte au moins un perçage 88 qui débouche dans la périphérie et dans l'alésage 80 du piston secondaire 18.

Dans cette configuration, l'élément cylindrique tubulaire 90 est constitué d'une bague annulaire qui est d'un diamètre intérieur égal au diamètre "D₁₈" du piston 18, qui est accolée à l'arrière du joint à lèvre 50, et qui est reçue dans une gorge 120 complémentaire du corps 12 du maître-cylindre 10.

Le diamètre extérieur de la bague annulaire est inférieure au diamètre intérieur de la gorge 120 ménageant ainsi un espace sensiblement annulaire 51 reliant la chambre de pression 62 et la chambre d'alimentation 60.

Cette configuration n'est évidemment pas limitative de l'invention, et la bague annulaire 90 pourrait être reçue dans un boîtier cylindrique rapporté dans le corps du maître cylindre, ledit boîtier comportant tout ou partie de la gorge 120 dans laquelle est reçue la bague 90.

Dans ce mode de réalisation, le joint 50 comporte, de manière connue une lèvre 122, mais il comporte de surcroît une lèvre arrière supplémentaire 124 qui est en en appui sur la périphérie du piston 18 mais aussi sur une face transversale avant 126 de la bague annulaire 90. Cette lèvre permet de garantir l'étanchéité du fluide hydraulique entre le joint 50 et la bague annulaire 90 quand le perçage 88 est axialement au droit de la face 126 de la bague annulaire 90. Le joint comporte par ailleurs un lobe avant 125 assurant le maintien du joint 50 dans la gorge 54 et un lobe supérieur 127 suffisamment souple pour permettre le passage du fluide hydraulique par l'espace annulaire 51 formant canal de réalimentation entre le corps du maître-cylindre et la périphérie radialement externe de la bague pour la réalimentation de la chambre avant 62 lorsque la pression dans la chambre de pression 62 est inférieure à la pression régnant dans la chambre d'alimentation 60. L'espace annulaire est obturé par le lobe supérieur 127 lorsque la pression dans la chambre de pression 62 est supérieure à la pression dans la chambre d'alimentation 60.

La bague 90 est bloquée longitudinalement selon l'axe A au moyen de butées axiales formées vers l'arrière par un épaulement annulaire de raccordement de la gorge 120 au canal 70 et vers l'avant dans l'exemple représenté par le joint 50, lui-même maintenu par le lobe 125.

On peut également prévoir pour maintenir vers l'avant la bague 90 de pratiquer une gorge de réception pour la bague 90 dans la gorge 120, de diamètre supérieure au diamètre de la gorge 120. Ainsi la bague 90 viendrait vers l'avant en appui contre un épaulement. Dans ce cas, il faudrait prévoir des passages pour le fluide de l'espace annulaire vers la chambre de pression 62, par exemple pratiqués dans la périphérie extérieure de la bague 90 ou dans l'épaulement formant butée avant de la bague 90.

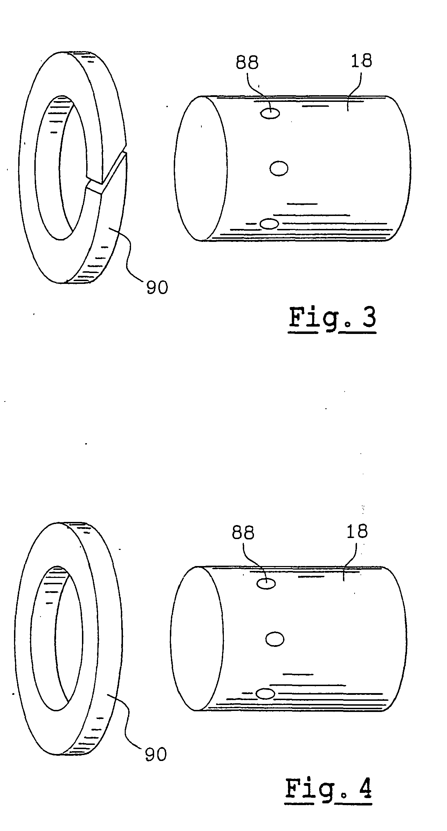

La bague peut être réalisée de différentes façons. De préférence, comme l'illustre la figure 3, la bague 90 peut être fendue pour permettre son montage par l'arrière du maître-cylindre 10 et pour assurer un serrage étanche sur le piston 18.

La bague annulaire 90 peut par exemple être introduite, déformée dans un manchon approprié (non représenté) dans l'alésage 14 après le joint 50 et avant que les pistons 16, 18 ne soient introduits à leur tour dans l'alésage 14. Puis, le manchon est retiré et la bague annulaire se détend spontanément en prenant place dans la gorge 120.

En variante, le maître cylindre 10 peut comporter une face transversale d'extrémité avant démontable (non représentée), de manière à permettre l'introduction d'au moins une bague 90 pleine, qui a telle que représentée à la figure 4, et du joint à lèvre 50, par l'avant du maître-cylindre 10.

Cette face transversale d'extrémité avant démontable peut aussi permettre l'introduction d'une bague 90 fendue, et/ou des joints 48 et 50 et bagues associés aux deux pistons 16 et 18.

De la sorte, le piston 18 est mobile entre trois positions remarquables.

La course morte "Cₘ₂" est réduite à la distance séparant le perçage 88 d'une face arrière 128 de la bague formant l'élément 90, comme représenté à la figure 2A.

Initialement, le piston secondaire 18 occupe sa position de repos, comme représenté à la figure 2A. Dans cette configuration le clapet 84 est ouvert car les perçages 88 sont agencés en arrière de la face arrière 128 de la bague formant l'élément 90 tubulaire et ne sont donc pas masqués par cette bague 90.

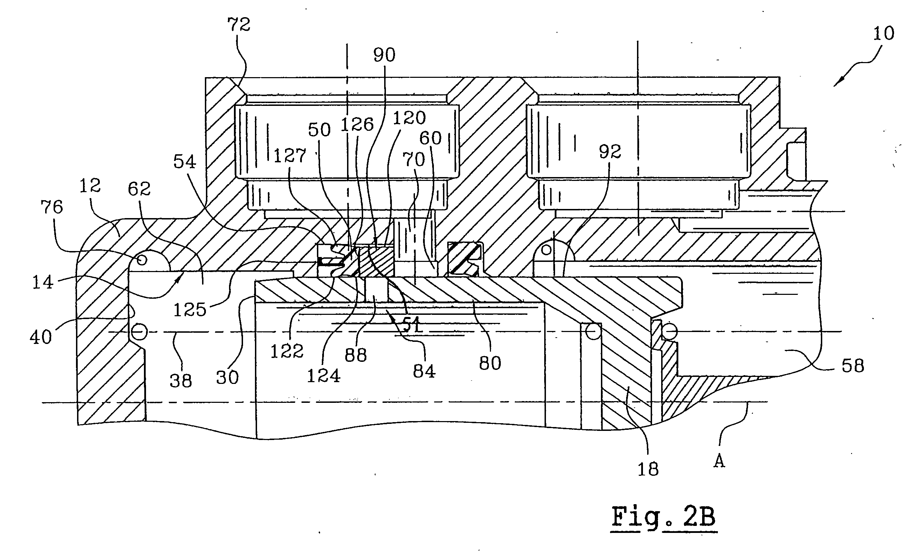

Puis, comme l'illustre la figure 2B, le piston secondaire 18 avançant sous l'effet d'une force transmise par le ressort 42 de rappel du piston primaire 16, le clapet 84 se ferme car le perçage 88 est recouvert par la bague formant l'élément 90 tubulaire, interrompant ainsi la circulation de fluide hydraulique entre la chambre arrière 60 secondaire d'alimentation et la chambre avant 62 secondaire de pression. La course morte "Cₘ₂" a donc été parcourue par le piston secondaire 18, et une pression hydraulique de freinage peut alors,s'établir dans la chambre avant 62 secondaire de pression.

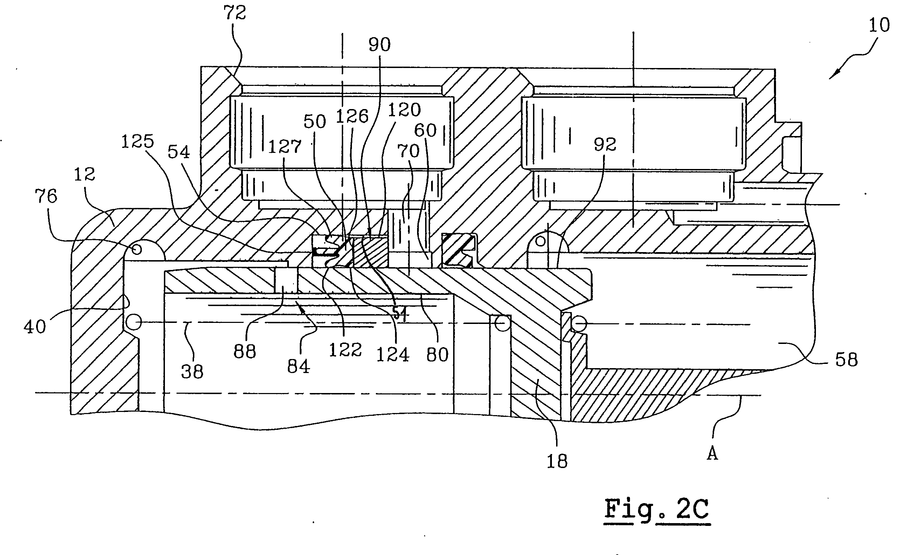

Enfin, dans une position plus avancée du piston secondaire 18 qui est représentée à la figure 2C, le perçage 88 a franchi le joint 50, établissant ainsi une pression de freinage croissante, puis le piston 18 vient en butée dans une position de fin de course contre la face d'épaulement 40 d'extrémité avant de l'alésage 14 du maître cylindre 10.

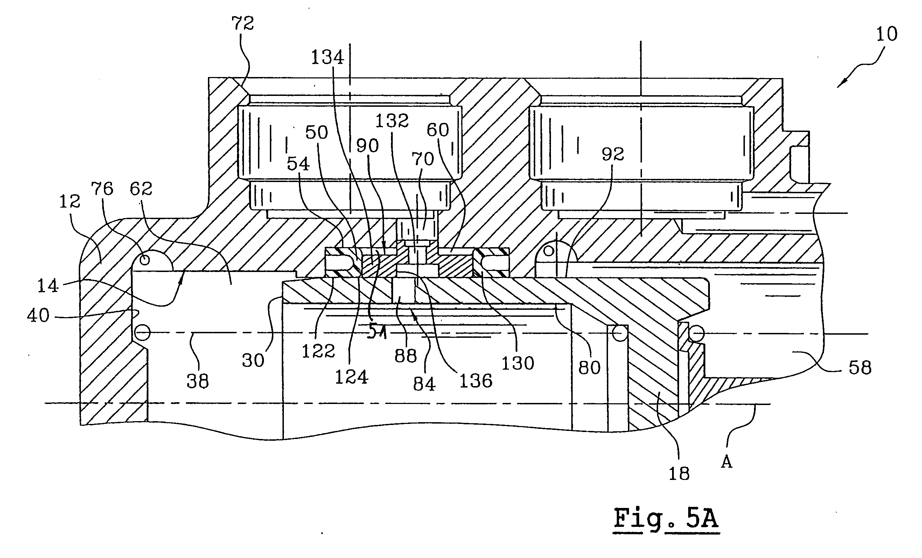

Selon un deuxième mode de réalisation de l'invention qui est représenté en référence aux figures 5A à 5C, le maître-cylindre comporte notamment un joint à lèvre 130, agencé en arrière du conduit 70 d'arrivée de fluide hydraulique qui débouche dans la chambre d'alimentation 60 du piston secondaire 18, et la bague 90 est agencée axialement entre les deux joints à lèvre 50 et 130.

En particulier, la bague 90 comporte au moins un perçage radial 132 qui est agencé en regard d'une gorge reliée au conduit 70 d'arrivée de fluide hydraulique.

Dans cette configuration, la bague 90 assure de surcroît une fonction de maintien des joints 50 et 130.

La bague 90 comporte un tronçon annulaire 134 avant, d'un diamètre intérieur égal à celui du piston 18, qui est accolé immédiatement en arrière du joint à lèvre 50, et d'un diamètre extérieur du tronçon annulaire 134 inférieur au diamètre à la gorge recevant le tronçon 134 afin de ménager un espace annulaire 51 formant canal de réalimentation de la chambre de pression avant 62 par la chambre d'alimentation arrière 60. Le joint à lèvre 50 est identique à celui du mode de réalisation précédent, et il comporte donc deux lèvres 122 et 124. La bague 90 comporte aussi un tronçon annulaire 135 arrière, d'un diamètre intérieur égal à celui du piston 18.

La bague 90 est maintenue longitudinalement dans le corps du maître-cylindre par coopération d'une saillie entourant le perçage 132 et le conduit 70 d'arrivée du fluide hydraulique.

Cette saillie est par exemple une saillie annulaire ou un téton de diamètre extérieur sensiblement égal au diamètre du conduit 70. Des passages (non représentés) du fluide hydraulique du conduit 70 dans l'espace annulaire sont pratiqués par exemple dans la saillie de la bague 90 ou dans le corps du maître-cylindre.

De la sorte, le piston 18 est mobile entre trois positions remarquables.

La course morte "Cₘ₂" est réduite à la distance séparant le perçage 88 d'une face arrière 136 transversale du tronçon avant 134 de la bague formant l'élément 90, comme représenté à la figure 5A.

Initialement, le piston secondaire 18 occupe sa position de repos, comme représenté à la figure 5A. Dans cette configuration le clapet 84 est ouvert car les perçages 88 sont agencés en arrière de la face arrière 136 du tronçon avant 134 de la bague formant l'élément 90 tubulaire.

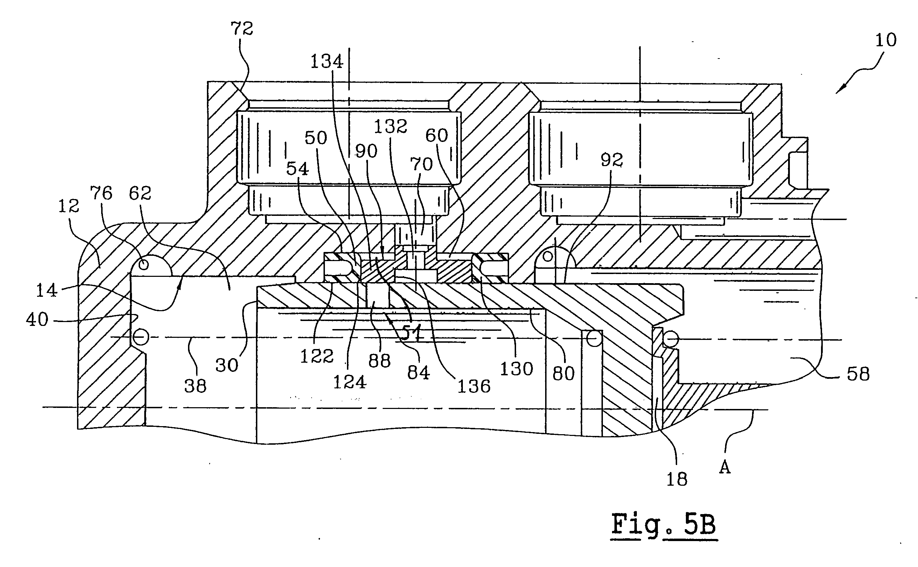

Puis, comme l'illustre la figure 5B, le piston secondaire 18 avançant d'une force transmise par le ressort 42 de rappel du piston primaire 16, le clapet 84 se ferme car le perçage 88 est recouvert par le tronçon avant 134 de la bague formant l'élément 90 tubulaire, interrompant ainsi la circulation de fluide hydraulique entre la chambre arrière 60 secondaire d'alimentation et la chambre avant 62 secondaire de pression. La course morte "Cₘ₂" a donc été parcourue par le piston secondaire 18, et une pression hydraulique de freinage s'établit alors dans la chambre avant 62 secondaire de pression.

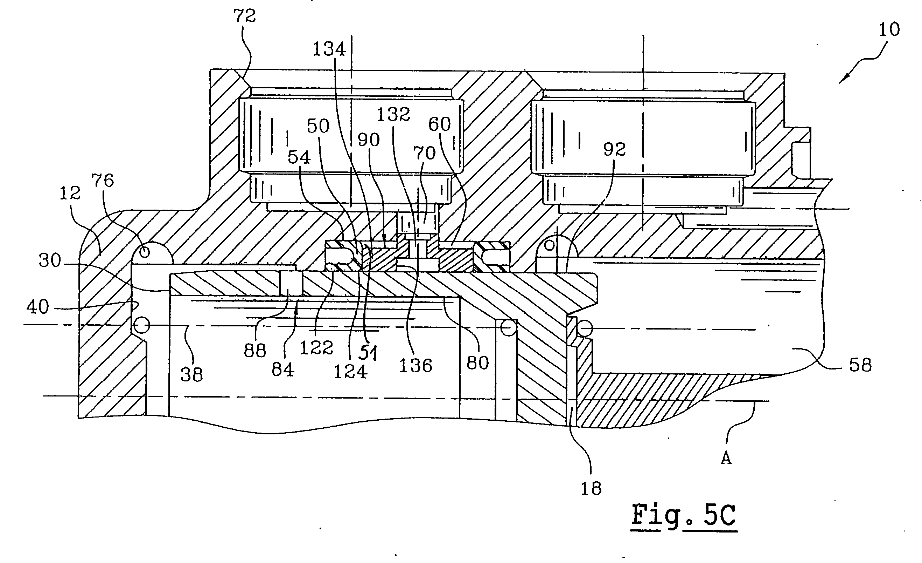

Enfin, dans une position plus avancée du piston secondaire 18 qui est représentée à la figure 5C, le perçage 88 a franchi le joint 50, établissant ainsi une pression croissante de freinage, puis le piston 18 vient en butée dans une position de fin de course contre la face d'épaulement 40 d'extrémité avant de l'alésage 14 du maître cylindre 10.

A la fin de freinage, si la pression régnant dans la chambre de pression 62 est inférieure à la pression régnant dans la chambre d'alimentation 60, la réalimentation de la chambre de pression 60 s'effectue comme décrit pour le premier mode de réalisation représenté aux figures 2A à 2C.

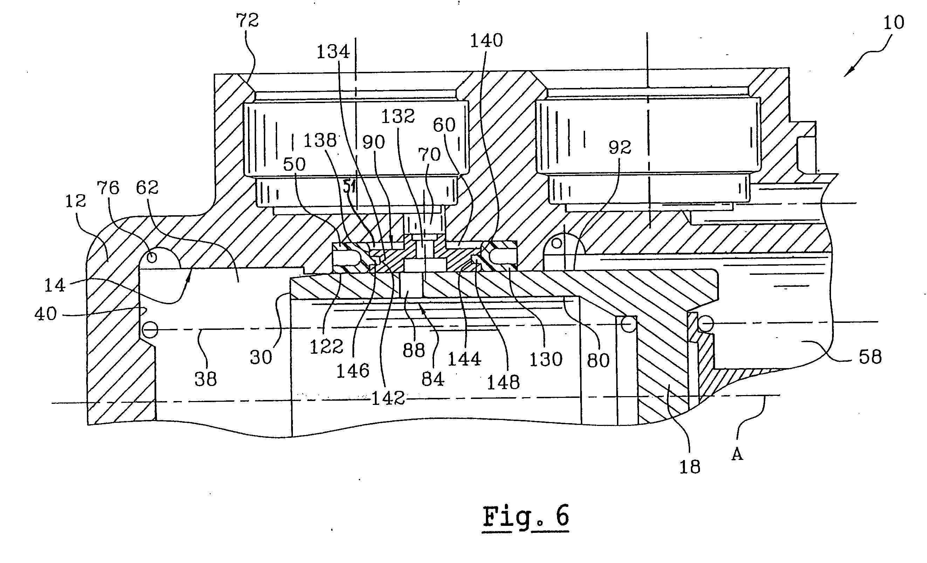

On remarquera que, en variante représentée à la figure 6, des faces transversales d'extrémité avant 138 et arrière 140 de la bague 90 peuvent comporter chacune une gorge annulaire 142, 144 pour la réception d'une collerette complémentaire 146, 148 de maintien du joint à lèvres 50, 130 attenant. La collerette 148, 148 peut être montée à force ou collée.

L'obturation des perçages 88 par la bague 90 assure le début de la montée en pression dans la chambre de pression 62, cependant la haute pression nécessaire pour le freinage est assurée lorsque les perçages 88 ont dépassé le joint 50.

Cette disposition n'est pas limitative de l'invention, et les faces transversales d'extrémité avant 138 et arrière 140 de la bague 90 peuvent comporter toute forme adaptée à la fixation d'un moyen de fixation complémentaire de maintien du joint à lèvres 50, 130 attenant, qui n'est pas nécessairement réalisé sous la forme d'une collerette.

Cette configuration permet avantageusement de monter la bague 90 et les deux joints 50 et 130 d'un seul tenant, et de se dispenser d'une lèvre 124 du joint 50 telle que précédemment décrite.

L'invention permet donc de disposer d'un maître cylindre 10 présentant une course réduite, gage d'une sécurité de freinage accrue.

## Revendications

1. Maître-cylindre (10) hydraulique de freinage de type "tandem" pour un véhicule automobile, du type qui comporte un corps (12) sensiblement axial à l'intérieur d'un alésage (14) sont montés coulissants, d'arrière en avant, deux pistons axiaux primaire (16) et secondaire (18) qui sont susceptibles d'être actionnés par un conducteur du véhicule entre une position arrière de repos et une position avant d'application d'un effort de freinage, du type dans lequel chaque piston (16, 18) est rappelé élastiquement vers sa position arrière de repos à l'encontre d'une première butée arrière, du type dans lequel au moins un moyen d'étanchéité (48, 50) est interposé entre chaque piston (16, 18) et l'alésage (14) pour délimiter dans l'alésage (14) une chambre d'alimentation arrière (56, 60) en fluide hydraulique et une chambre de pression avant (58, 62), du type dans lequel chaque piston (16, 18) comporte un alésage (78, 80) qui est ouvert vers l'avant et communique avec la chambre (58, 62) de pression avant, du type dans lequel le piston (16, 18) comporte au moins un clapet (82, 84) sensiblement radial qui débouche dans sa périphérie et dans son alésage (78, 80) et qui est mobile entre une position de passage, correspondant à la position arrière de repos du piston (16, 18), selon laquelle le clapet (82, 84) est agencé en arrière du moyen d'étanchéité (48, 50) et met en communication la chambre arrière d'alimentation (56, 60) et la chambre de pression avant (58, 62), et une position d'isolation, correspondant à la position avant d'application du piston (16, 18), selon laquelle le clapet (82, 84) est agencé en avant du moyen d'étanchéité (48, 50) et interrompt la communication entre la chambre arrière d'alimentation (56, 60) et la chambre avant de pression (58, 62) pour permettre l'établissement d'une pression hydraulique de freinage dans la chambre de pression avant (58, 62), la chambre de pression avant (62) associée à au moins un piston (18) comportant au moins un élément (90) cylindrique tubulaire d'étanchéité extérieur au piston maintenu axialement dans le corps (12) du maître-cylindre, ledit élément (90) cylindrique d'étanchéité s'étendant axialement en arrière du moyen d'étanchéité (50) et étant destiné, lors de l'avancée du piston (18), à obturer le clapet radial (84) pour obtenir une course (Cₘ₂) de fermeture du clapet inférieure à la distance séparant le clapet (84) du moyen d'étanchéité (50),
**caractérisé en ce qu'**un espace sensiblement annulaire (51) pour réalimenter la chambre de pression avant (58,62) est ménagé entre le corps du maître-cylindre et l'élément tubulaire d'étanchéité (90), ledit espace reliant la chambre de pression avant (58, 62) et la chambre d'alimentation arrière (56, 60).

2. Maître-cylindre (10) selon la revendication précédente, **caractérisé en ce que** le moyen d'étanchéité (50) est constitué d'un joint à lèvre qui est reçu dans une gorge (54) de l'alésage (14) du maître-cylindre (10).

3. Maître-cylindre (10) selon la revendication précédente **caractérisé en ce que** le moyen d'étanchéité (50) comporte un lobe supérieur obturant l'espace (51) pour réalimenter la chambre de pression avant (58, 62) lorsque la pression dans la chambre de pression avant (58, 62) est supérieure à la pression dans la chambre d'alimentation arrière (56, 60) et libérant le passage du liquide de frein de la chambre d'alimentation arrière (56, 60) dans la chambre de pression avant (58, 62) lorsque la pression dans la chambre de pression avant (58, 62) est inférieure à la pression dans la chambre d'alimentation arrière (56, 60).

4. Maître-cylindre (10) selon la revendication 2 ou 3, **caractérisé en ce que** le piston (18) est monobloc, et **en ce que** le clapet radial comporte au moins un perçage (88) qui débouche dans la périphérie et dans l'alésage (80) du piston (18).

5. Maître-cylindre (10) selon la revendication précédente, **caractérisé en ce que** l'élément cylindrique tubulaire (90) est constitué d'une bague annulaire qui est d'un diamètre intérieur égal à celui du piston (18), qui est accolée à l'arrière du joint à lèvre (50), et qui est reçue dans une gorge (120) complémentaire du maître-cylindre (10).

6. Maître cylindre (10) selon la revendication précédente, **caractérisé en ce que** le joint (50) comporte une lèvre supplémentaire (124) en appui sur une face (126) transversale avant de la bague annulaire (90).

7. Maître-cylindre (10) selon la revendication précédente, **caractérisé en ce que** la bague (90) est fendue pour permettre son montage au moins par l'arrière du maître-cylindre (10).

8. Maître-cylindre (10) selon la revendication 6, **caractérisé en ce qu'**il comporte une face transversale d'extrémité avant démontable, de manière à permettre l'introduction d'au moins une bague (90) pleine et du joint à lèvre (50) par l'avant du maître-cylindre.

9. Maître-cylindre (10) selon l'une quelconque des revendications 5 à 8, **caractérisé en ce qu'**il comporte un joint (130) à lèvre supplémentaire, agencé en arrière d'un conduit (70) d'arrivée de fluide hydraulique qui débouche dans la chambre d'alimentation (60) du piston (18), et **en ce que** la bague (90) est agencée axialement entre les deux joints (50, 130) à lèvre.

10. Maître-cylindre (10) selon la revendication précédente, **caractérisé en ce que** la bague (90) comporte un perçage radial (132) qui est agencé en regard du conduit (70) d'arrivée de fluide hydraulique.

11. Maître-cylindre (10) selon l'une des revendications 9 ou 10, **caractérisé en ce que** les faces transversales d'extrémité (138, 140) avant et arrière de la bague (90) comportent chacune une gorge annulaire (142, 144) pour la réception d'une collerette (146, 148) complémentaire de maintien du joint à lèvre (90, 130) attenant.

## Claims

1. Hydraulic-braking master cylinder (10) of the "tandem" type for a motor vehicle, of the type comprising a substantially axial body (12), inside a bore (14) of which two axial pistons, namely a primary piston (16) and a secondary piston (18), are slidingly fitted in the back-to front direction respectively, and are capable of being actuated by the driver of the vehicle between a rest rear position and a forward position, in which a braking force is applied ; of the type in which each piston (16, 18) is resiliently returned to its rest rear position onto a first rear stop ; of the type in which at least one sealing means (48, 50) is disposed between each piston (16, 18) and the bore (14) so as to define, within the bore (14), a rear hydraulic-fluid supply chamber (56, 60) and a front pressure chamber (58, 62) ; of the type in which each piston (16, 18) comprises a bore (78, 80), open in the forward direction and communicating with the front pressure chamber (58, 62) ; of the type in which the piston (16, 18) comprises at least one substantially radial valve (82, 84), opening into its periphery and into its bore (78, 80), and capable of moving between a let-through position, which corresponds to the rest rear position of the piston (16, 18) and in which the valve (82, 84) is situated rearwards of the sealing means (48, 50) and connects the rear supply chamber (56, 60) with the front pressure chamber (58, 62), and an isolating position, which corresponds to the forward application position of the piston (16, 18) and in which the valve (82, 84) is situated forwards of the sealing means (48, 50) and separates the rear supply chamber (56, 60) from the front pressure chamber (58, 62), so as to produce a hydraulic braking pressure inside the front pressure chamber (58, 62), wherein the pressure chamber (62), associated with at least one piston (18), comprising at least one sealing tubular cylindrical element (90) outside the piston and retained axially in the body (12) of the master cylinder, said sealing cylindrical element (90) extending axially rearwards of the sealing means (50) and being capable, when the piston (18) travels forwards, of obturating the radial valve (84) so as to obtain a closing travel (Cₘ₂) of the valve which is smaller than the distance between the valve (84) and the sealing means (50),
**characterised in that** a substantially annular space (51) for the resupply of the front pressure chamber (58, 62) is provided between the body of the master cylinder and the sealing tubular element (90), said space connecting the front pressure chamber (58, 62) to the rear supply chamber (56, 60).

2. Master cylinder (10) according to the preceding claim, **characterised in that** the sealing means (50) consists of a lip seal, accommodated in a groove (54) made in the bore (14) of the master cylinder (10).

3. Master cylinder (10) according to the preceding claim, **characterised in that** the sealing means (50) comprises an upper lobe, sealing off the space (51) intended for the resupply of the front pressure chamber (58, 62) when the pressure, prevailing inside the front pressure chamber (58, 62), is higher than that inside the rear supply chamber (56, 60), and letting the brake fluid through from the rear supply chamber (56, 60) into the front pressure chamber (58, 62), when the pressure, prevailing inside the front pressure chamber (58, 62), is lower than that inside the rear supply chamber (56, 60).

4. Master cylinder (10) according to claim 2 or claim 3, **characterised in that** the piston (18) is made in a single piece, and **in that** the radial valve comprises at least one through-hole (88) opening into the periphery and into the bore (80) of the piston (18).

5. Master cylinder (10) according to the preceding claim, **characterised in that** the tubular cylindrical element (90) consists of an annular ring having an inner diameter equal to that of the piston (18), said ring being adjacent to the back face of the lip seal (50) and being accommodated inside a complementary groove (120) provided in the master cylinder (10).

6. Master cylinder (10) according to the preceding claim, **characterised in that** the seal (50) comprises a further lip (124), bearing on a front transverse face (126) of the annular ring (90).

7. Master cylinder (10) according to the preceding claim, **characterised in that** the ring (90) is slit so as to facilitate its fitting at least from the rear part of the master cylinder (10).

8. Master cylinder (10) according to claim 6, **characterised in that** it comprises a front-end transverse face capable of being dismounted for the insertion of at least a solid ring (90) and of the lip seal (50), from the front part of the master cylinder.

9. Master cylinder (10) according to any one of claims 5 to 8, **characterised in that** it comprises a further lip seal (130), arranged rearwards of a hydraulic-fluid feed channel (70) which opens into the supply chamber (60) of the piston (18), and **in that** the ring (90) is axially disposed between the lip seals (50, 130).

10. Master cylinder (10) according to the preceding claim, **characterised in that** the ring (90) has a radial through-hole (132), facing the hydraulic-fluid feed channel (70).

11. Master cylinder (10) according to claim 9 or claim 10, **characterised in that** each of the front- and rear-end transverse faces (138, 140) of the ring (90) comprises an annular groove (142, 144) accommodating a complementary flange (146, 148) for the retention of the adjoining lip seal (90, 130).

## Patentansprüche

1. Hydraulischer "Tandem"-Hauptbremszylinder (10) für ein Kraftfahrzeug, vom Typ, der einen im Wesentlichen axialen Körper (12) mit einer Bohrung (14) aufweist, in der von hinten nach vorne ein axialer Primärkolben (16) und ein axialer Sekundärkolben (18) gleitend angebracht sind, welche von einem Fahrer des Fahrzeugs zwischen einer hinteren Ruhestellung und einer vorderen Stellung zum Aufbringen einer Bremskraft betätigt werden können, vom Typ, bei dem jeder Kolben (16, 18) elastisch gegen einen ersten hinteren Anschlag in seine hintere Ruhestellung zurückgestellt wird, vom Typ, bei dem mindestens ein Dichtmittel (48, 50) zwischen jedem Kolben (16, 18) und der Bohrung (14) angeordnet ist, um in der Bohrung (14) eine hintere Kammer (56, 60) zur Versorgung mit Hydraulikfluid und eine vordere Druckkammer (58, 62) zu begrenzen, vom Typ, bei dem jeder Kolben (16, 18) eine Bohrung (78, 80) aufweist, die nach vorne offen ist und mit der vorderen Druckkammer (58, 62) in Verbindung steht, vom Typ, bei dem der Kolben (16, 18) mindestens ein im Wesentlichen radiales Ventilelement (82, 84) aufweist, das in seinen Umfang und in seine Bohrung (78, 80) mündet und zwischen einer der hinteren Ruhestellung des Kolbens (16, 18) entsprechenden Durchlassstellung, in der das Ventilelement (82, 84) hinter dem Dichtmittel (48, 50) angeordnet ist und die hintere Versorgungskammer (56, 60) mit der vorderen Druckkammer (58, 62) verbindet, und einer der vorderen Beaufschlagungsstellung des Kolbens (16, 18) entsprechenden Sperrstellung beweglich ist, in der das Ventilelement (82, 84) vor dem Dichtmittel (48, 50) angeordnet ist und die Verbindung zwischen der hinteren Versorgungskammer (56, 60) und der vorderen Druckkammer (58, 62) trennt, um den Aufbau eines hydraulischen Bremsdrucks in der vorderen Druckkammer (58, 62) zu ermöglichen, wobei die mindestens einem Kolben (18) zugeordnete vordere Druckkammer (62) mindestens ein zylindrisches, röhrenförmiges Dichtelement (90) aufweist, das außerhalb des Kolbens angeordnet und axial im Körper (12) des Hauptzylinders gehalten ist, wobei das zylindrische Dichtelement (90) sich axial hinter dem Dichtmittel (50) erstreckt und bei der Vorwärtsbewegung des Kolbens (18) das radiale Ventilelement (84) schließen soll, um einen Weg (Cm₂) zum Schließen des Ventilelements zu erhalten, der kleiner ist als der Abstand zwischen dem Ventilelement (84) und dem Dichtmittel (50),
**dadurch gekennzeichnet, dass** zwischen dem Körper des Hauptzylinders und dem röhrenförmigen Dichtelement (90) ein im Wesentlichen ringförmiger Zwischenraum (51) zur erneuten Versorgung der vorderen Druckkammer (58, 62) ausgebildet ist, wobei der Zwischenraum die vordere Druckkammer (58, 62) und die hintere Versorgungskammer (56, 60) miteinander verbindet.

2. Hauptzylinder (10) nach dem vorhergehenden Anspruch, **dadurch gekennzeichnet, dass** das Dichtmittel (50) aus einer Lippendichtung besteht, die in einer Nut (54) der Bohrung (14) des Hauptzylinders (10) aufgenommen ist.

3. Hauptzylinder (10) nach dem vorhergehenden Anspruch, **dadurch gekennzeichnet, dass** das Dichtmittel (50) einen oberen Lappen aufweist, der den Zwischenraum (51) schließt, um die vordere Druckkammer (58, 62) erneut zu versorgen, wenn der Druck in der vorderen Druckkammer (58, 62) höher ist als der Druck in der hinteren Versorgungskammer (56, 60), und der das Durchströmen der Bremsflüssigkeit aus der hinteren Versorgungskammer (56, 60) in die vordere Druckkammer (58, 62) ermöglicht, wenn der Druck in der vorderen Druckkammer (58, 62) kleiner ist als der Druck in der hinteren Versorgungskammer (56, 60).

4. Hauptzylinder (10) nach Anspruch 2 oder 3, **dadurch gekennzeichnet, dass** der Kolben (18) einstückig ausgebildet ist und das radiale Ventilelement mindestens eine Durchbohrung (88) aufweist, die in den Umfang und in die Bohrung (80) des Kolbens (18) mündet.

5. Hauptzylinder (10) nach dem vorhergehenden Anspruch, **dadurch gekennzeichnet, dass** das zylindrische, röhrenförmige Element (90) aus einem ringförmigen Reifen besteht, dessen Innendurchmesser dem des Kolbens (18) entspricht, der hinter der Lippendichtung (50) angefügt ist und in einer komplementären Nut (120) des Hauptzylinders (10) aufgenommen ist.

6. Hauptzylinder (10) nach dem vorhergehenden Anspruch, **dadurch gekennzeichnet, dass** die Dichtung (50) eine zusätzliche Lippe (124) aufweist, die an einer vorderen Querfläche (126) des ringförmigen Reifens (90) anliegt.

7. Hauptzylinder (10) nach dem vorhergehenden Anspruch, **dadurch gekennzeichnet, dass** der Reifen (90) geschlitzt ist, um zumindest seine Montage über den hinteren Abschnitt des Hauptzylinders (10) zu ermöglichen.

8. Hauptzylinder (10) nach Anspruch 6, **dadurch gekennzeichnet, dass** er am vorderen Ende eine abnehmbare Querfläche aufweist, um das Einsetzen mindestens eines massiven Reifens (90) und der Lippendichtung (50) über den vorderen Abschnitt des Hauptzylinders zu ermöglichen.

9. Hauptzylinder (10) nach einem der Ansprüche 5 bis 8, **dadurch gekennzeichnet, dass** er eine zusätzliche Lippendichtung (130) aufweist, die hinter einer Leitung (70) für die Zuführung von Hydraulikfluid angebracht ist, welche in die Kammer (60) zur Versorgung des Kolbens (18) mündet, und dass der Reifen (90) axial zwischen den beiden Lippendichtungen (50, 130) angeordnet ist.

10. Hauptzylinder (10) nach dem vorhergehenden Anspruch, **dadurch gekennzeichnet, dass** der Reifen (90) eine radiale Durchbohrung (132) aufweist, die gegenüber der Leitung (70) für die Zuführung von Hydraulikfluid ausgebildet ist.

11. Hauptzylinder (10) nach Anspruch 9 oder 10, **dadurch gekennzeichnet, dass** die Querflächen (138, 140) am vorderen und am hinteren Ende des Reifens (90) jeweils eine ringförmige Nut (142, 144) zur Aufnahme eines komplementären Kragens (146, 148) zum Halten der angrenzenden Lippendichtung (50, 130) aufweisen.
